# EUROPEAN PATENT SPECIFICATION

(11) **EP 2 411 204 B1**
(45) Date of publication and mention of the grant of the patent: **18.09.2013**
(21) Application number: 10709747.9
(22) Date of filing: 23.03.2010
(51) Int. Cl.: B29C 69/00, B29C 70/32, B32B 33/00

(54) **FILM FOR PRODUCTION OF COMPOSITE MATERIAL ARTEFACTS, PRODUCTION METHOD OF SAID FILM AND PRODUCTION METHOD OF COMPOSITE MATERIAL ARTEFACTS USING SAID FILM**
.
FILM POUR LA PRODUCTION D'ARTICLES EN MATÉRIAU COMPOSITE, PROCÉDÉ DE PRODUCTION DUDIT FILM ET PROCÉDÉ DE PRODUCTION D'ARTICLES EN MATÉRIAU COMPOSITE À L'AIDE DUDIT FILM

(30) Priority: 23.03.2009 IT TV20090056
(43) Date of publication of application: 01.02.2012
(73) Proprietor: A. Peruzza S.r.l., Mareno Di Piave (IT)
(72) Inventor: PERUZZA, Paolo, I-31015 Conegliano (IT)
(74) Representative: Bellemo, Matteo
(86) International application number: PCT/EP2010/053768
(87) International publication number: WO 2010/108916

(56) References cited:
- EP-A- 1 621 322
- WO-A-02/057573
- US-A- 5 496 602

## Description

### TECHNICAL FIELD

The present invention relates to a film for production of composite material artefacts, to a production method of said film, and to a production method of composite material artefacts using said film.

More in detail, the present invention relates to a resin constraint film to be used in the production of composite material artefacts having a tubular shape; use to which the following description refers purely by way of example, without this implying any loss of generality.

### BACKGROUND ART

As is known, composite material artefacts having a tubular shape and a non-tubular shape, are basically formed by one or more overlapped layers of glass fibres and/or carbon fibres and/or aramidic fibres and/or cotton, linen, hemp or other organic material fibres, appropriately braided and/or overlapped to one another and embedded in a matrix of epoxy, phenolic or polyester thermosetting resin.

In some production processes, the composite material artefact may be obtained from a semi-finished mat of fibres preimpregnated with resin still in a semisolid state (also called "prepreg"), which is shaped so as to follow the shape of the artefact to be obtained, and is then subjected to a thermal curing cycle during which the polymerization of the resin occurs, with a subsequent irreversible solidification thereof.

In the case of composite material artefacts having a tubular shape, the semi-finished product is wound about a metal chuck and is then placed within the oven where the polymerization of the resin takes place, beforehand the same has been wound with a plastic material tape (generally polypropylene) which serves to retain the resin within the semi-finished product until the resin is totally set. In most cases, the resin constraint tape is then removed from the composite material artefact at the end of the resin polymerization process.

The need to use the resin constraint tape is due to the fact that, during the initial phase of the polymerization process, the thermosetting resin increases in volume and undergoes an increase of its fluidity, so that, if it is not kept in place, it tends to pour out of the semi-finished product by gravity before solidifying, compromising the structural integrity of the artefact.

Finally, for some uses, the surface of the composite material artefact needs to be coloured.

In this case, the production process provides that a coloured paint layer is applied by spray or brush directly on the surface of the composite material artefact, after the thermosetting resin has completed the polymerization process; or it provides that a coloured paint layer is applied by spray or brush directly on the surface of the semi-finished product, before the resin polymerisation process takes place.

In this second case, during the polymerisation process, the thermosetting resin can stably incorporate the particles of coloured pigment therein thus improving the surface finishing of the artefact.

In fact, as is known, the coloured paint consists of a liquid and substantially transparent mixture of resin and diluent/solvent which are finely mixed together, and of a variable amount of base pigment particles (i.e. finely ground particles of the desired colouring substance) suspended in the transparent liquid mixture. The diluent/solvent has the function to maintain the resin in a liquid state, while the resin is the chemical substance which grips to the surface of the artefact when it is still in a liquid phase, and which stably sticks to the surface of the artefact retaining the pigment particles when the diluent/solvent is naturally dispersed by evaporation.

If the resin used in the coloured paint is chemically compatible with the thermosetting resin of the composit-material artefact, during the initial phase of the polymerization process, the thermosetting resin positioned at the surface of the composite material artefact can incorporate therein the resin and the pigment particles which form the coloured paint, thus colouring on the surface of the composite material artefact.

As specified in Japanese patents JP11309797 and JP2000062032 and in European patent EP1621322 in recent years some manufacturers of tubular-shaped composite material artefacts, in order to simplify and speed up the production process, started applying the coloured paint directly on the face of the polypropylene tape which is intended to come into direct contact with the surface of the composite material artefact, then delegating to the thermosetting resin of the artefact the task to incorporate therein, during the polymerization process, the pigment particles present on the surface of the tape.

In this case, the coloured paint must necessarily be applied with a brush or by means of screen printing, directly on the "non-treated" face of the polypropylene constraint tape, i.e. on the face that has, by definition, a surface tension having a value lower than 38 Dyne/centimetre, so as to generate medium-weak molecular bonds between the coloured paint and the surface of the polypropylene constraint tape.

In fact it is well known that, if the thermosetting resin on the surface of the composite material artefact comes into direct contact with a polypropylene surface with a surface tension of more than 38 Dyne/centimetre, it permanently binds to the constraint tape so that the tape may be only removed by mechanical surface abrasion by sandpaper or the like. A processing that would irreparably damage the surface of the composite material artefact.

Obviously, the constraint tape is used in the production and colouring of the composite material artefact after the very thin layer of coloured paint has dried on the surface of the tape.

Even having drastically reduced the production and colouring costs of composit-material artefacts, the use of polypropylene constraint tape with a face coloured by screen printing, does not allow to realize surfaces with colours having intensity, brightness and shine comparable to those obtainable by directly spray or brush painting the composite material artefact at the end of the polymerization process of the thermosetting resin.

In the end, via the above described production process it is not possible to give the surface of the composit-material artefact a metal look. As a matter of fact, in order to obtain this kind of surface finishing, the manufacturers of composite material artefacts generally use semi-finished mats in which fibres undergo a surface metallization process before being impregnated with thermosetting resin.

Unfortunately, the final aesthetic result does not compensate the considerable increase in production costs: the surface metallization of the fibres of the semi-finished product is indeed the result of a particularly long and expensive surface treatment, and the composit-material artefact, at the end of the polymerization of the resin, does not have a surface coating with a uniform metal look.

### DISCLOSURE OF INVENTION

It is therefore an aim of the present invention to manufacture a constraint film for the production of composite material artefacts, in the form of a tape or sheet, which permits to realize, on composite material artefacts, coloured surfaces having colours with intensity, brightness, shine and/or metal look comparable to those that may be obtained by directly spray or brush painting the composite material artefact at the end of the polymerization process of the thermosetting resin.

In compliance with the above aims, according to the present invention a constraint film for production of composite material artefacts is provided as specified in claim 1 and preferably, though not necessarily, in any one of the dependent claims.

According to the present invention, a production method of a constraint film for production of composite material artefacts, is also provided as specified in claim 9 and preferably, though not necessarily, in any one of the dependent claims.

Finally according to the present invention, a production method of composite material artefacts is provided as specified in claim 17 and preferably, though not necessarily, in any one of the dependent claims.

### BRIEF DESCRIPTION OF THE DRAWINGS

The present invention will now be described with reference to the accompanying drawings, which show a non-limitative embodiment thereof, in which:
- figure 1 schematically shows a film for production of composit-material artefacts realized according to the teachings of the present invention; whereas
- figures 2, 3, and 4 schematically show the various steps of a method for production of composite material artefacts, carried out according to the teachings of the present invention.

### BEST MODE FOR CARRYING OUT THE INVENTION

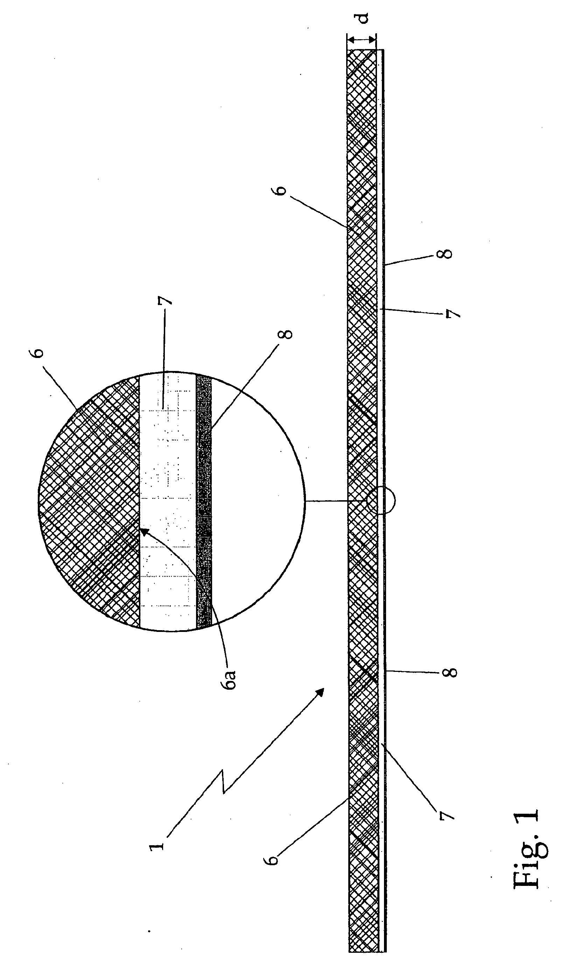

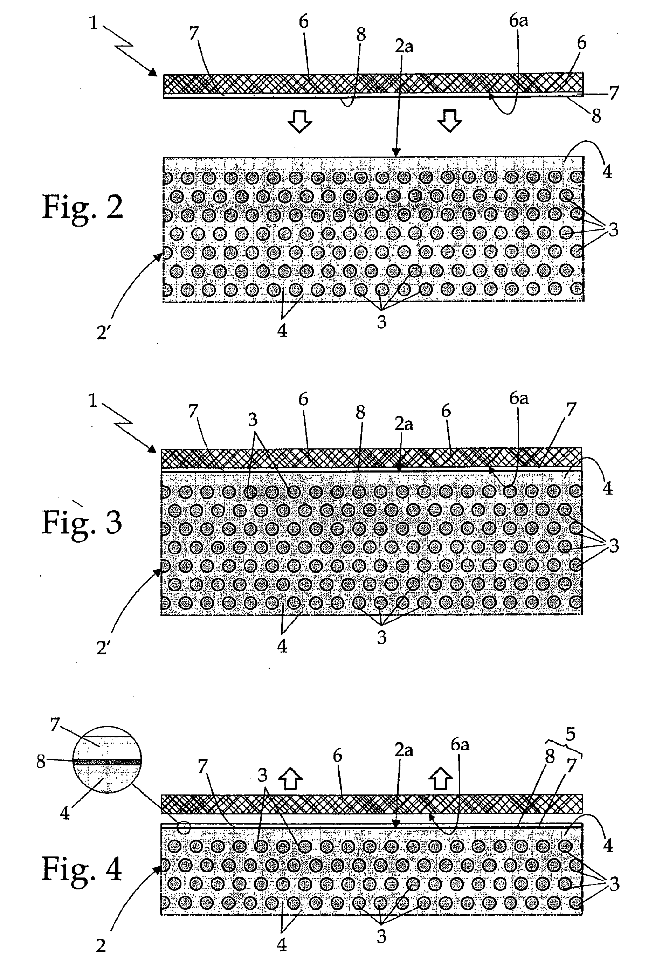

With reference to figures 1 and 4, numeral 1 indicates as a whole a thermosetting-resin constraint film specifically designed for being used in the production of composite material artefacts 2 having preferably, though not necessarily, a flat or tubular shape, and which are substantially formed by one or more overlapped layers of glass fibres and/or carbon fibres and/or aramidic fibres and/or cotton fibres and/or linen fibres and/or hemp fibres and/or fibres made of other organic or inorganic material, hereinafter indicated by numeral 3, appropriately overlapped or braided with one another and embedded in a matrix of epoxy, phenolic, polyester thermosetting resin or the like.

More specifically, with reference to figures 1 and 2, the composite material artefacts are manufactured by subjecting a semi-finished product 2' which follows the shape of the composite material artefact 2 to be realized and which is formed by one or more layers of fibres 3 impregnated with a thermosetting resin 4 still in a high viscosity liquid state, to a thermal curing cycle causing the polymerization of thermosetting resin 4 with a subsequent irreversible solidification thereof; and the constraint film 1, in the form of a tape or sheet, is designed so to be wound around the semi-finished product 2' to keep the thermosetting resin 4 within the semi-finished product 2' during the polymerization process.

In addition to the above, the constraint film 1 is also designed so to deposit, on outer surface 2a of semi-finished product 2', a very thin outer coating film 5 which, at the end of the polymerization process of thermosetting resin 4, is permanently bounded to the surface of resulting composit-material artefact 2.

With reference to figure 1, constraint film 1 is substantially formed by a supporting film 6 which is preferably, though not necessarily, made of biaxially oriented polypropylene or by a similar plastic polymer; by an intermediate layer 7 of a release chemical product which totally coats the front face 6a of supporting film 6 intended to come into contact with semi-finished product 2'; and by a surface layer 8 of coating material which is homogeneous and preferably, though not necessarily, of a metal type, and which completely coats intermediate layer 7 and is realized via a vacuum vaporization deposition process.

More specifically, contrary to presently used solutions, film 6 is structured so that the plastic polymer which is located on the surface of the front face 6a intended to come into contact with semi-finished product 2', locally has a surface tension Tₛ with a value preferably, though not necessarily, ranging between 45 Dyne/centimetre and 70 Dyne/centimetre, and in any case greater than 38 Dyne/centimetre; and so that the intermediate layer 7 of release chemical product is spread on front face 6a of film 6 via a flexo printing process or the like (such as for instance a process of screen, rotogravure, offset and rotoffset printing), so that the release chemical product binds to the surface of the underlying film 6 and can accept the following deposition by vacuum vaporization.

In other words, intermediate layer 7 of release chemical product is applied on the "treated" face of the film 6 made of polypropylene or the like, i.e. on the face that locally has a surface tension Tₛ with a value greater than 38 Dyne/centimetre.

In addition to the above, the thickness of the release chemical product forming the intermediate layer 7, must be preferably, though not necessarily, lower than the thickness d of the polypropylene film 6 by at least one order of magnitude.

Surface layer 8 is instead deposited directly on intermediate layer 7 via a vacuum vaporization deposition process, so that the metal coating material perfectly adheres to the intermediate layer 7, permanently binding to the release chemical product forming the intermediate layer, and so that the thickness of the coating metal material is preferably, though not necessarily, lower than 0,5 microns (i.e. 10⁻⁶ metres), that is lower than the thickness of intermediate layer 7.

In the example shown, in particular, constraint film 1 is produced from a biaxially oriented polypropylene film 6 with a thickness of about 35 microns, which undergoes a surface electrochemical treatment in which the surface of the front face 6a intended to come into contact with semi-finished product 2', is immersed in a high intensity electrical field (corona treatment) or is bombarded with high-energy ionized particles, or is hit by a jet of cold plasma, or is licked by flames, so that surface tension Tₛ of the polypropylene locally has a value of about 50 Dyne/centimetre; while intermediate layer 7 is formed by a layer of transparent paint applied via flexo printing, such as for instance the transparent paint commercialized by the company FlintGroup Italia S.p.a. with the name PLURICEL RC ARL.

In this matter, it should be noted that, contrary to a coloured paint, a transparent paint only consists of a liquid mixture of resin and diluent/solvent finely mixed together, and is always substantially transparent because the chemical products forming it are substantially colourless.

As far as surface layer 8 of coating material is concerned, the production method of constraint film 1 provides that the coating material is deposited directly on intermediate layer 7 via the vacuum vaporization process, so that the final thickness of surface layer 8 is preferably, though not necessarily, lower than 0,5 microns (i.e. 10⁻⁶ metres). In the example shown, in particular, the coating material forming surface layer 8, consists of aluminium deposited directly on intermediate layer 7 via the vacuum vaporization process, so that the final thickness of surface layer 8 ranges between 0,005 and 0,01 microns.

As an alternative to aluminium, surface layer 8 may also be made of copper, chromium, silver, gold, platinum, steel, brass, nickel and alloys thereof, or other vaporizable metal materials, or non-metal materials such as silicon (possibly even amorphous), graphite, tetrafluoroethylene (also known as Teflon) or other plastic materials depositable via the vacuum vaporization process, so that the final thickness of surface layer 8 is preferably, though not necessarily, lower than 0,05 microns.

The vacuum vaporization process, also known as vacuum vaporization deposition process, is a technology which is already widely known and used in other fields, and will not therefore be further disclosed.

With reference to figures 2, 3 and 4, composite material artefact 2 is made via a production method that firstly provides to realize a semi-finished product 2' which copies the shape of the composite material artefact 2 to be realized, and which is formed by one or more layers of fibres 3 possibly braided together and impregnated with a thermosetting resin 4 still in a high viscosity liquid state.

Following to the realization of the semi-finished product 2', the production method of composite material artefacts provides for the outer surface 2a of semi-finished product 2' to be completely covered with constraint film 1 (see figure 2), taking care that constraint film 1 is oriented so that surface layer 8 of the film is arranged in direct contact with semi-finished product 2', and therefore in direct contact with the thermosetting resin 4 present on outer surface 2a of semi-finished product 2'.

After semi-finished product 2' has been covered by constraint film 1 so to confine into the semi-finished product 2' the thermosetting resin 4 which is still in a high viscosity liquid state, the production method of composite material artefacts provides for the semi-finished artefact 2' totally covered by the constraint film 1 (see figure 3) to undergo a thermal curing cycle so to cause the complete polymerization of thermosetting resin 4 with the subsequent irreversible solidification of the latter.

Obviously, the features of the thermal curing cycle depend on the type of thermosetting resin 4 used in the semi-finished product 2'.

Once polymerization of thermosetting resin 4 of semi-finished product 2' is completed, the production method of composite material artefacts provides for the semi-finished product 2' to be extracted from the oven, and preferably, though not necessarily, then for the constraint film 1 to be removed from semi-finished product 2', so to obtain a composite material artefact 2 having the surface coated by a very thin outer film 5 which is formed by intermediate layer 7 and surface layer 8 of constraint film 1.

During the polymerization process, thermosetting resin 4 of semi-finished product 2' binds perfectly to surface layer 8 of constraint film 1, stably and permanently sticking surface layer 8 to the outer surface 2a of semi-finished product 2'.

The complete transfer of layers 7 and 8 on semi-finished product 2' occurs because the molecular bonds established between surface layer 8 and intermediate layer 7 of constraint film 1 thanks to the vacuum vaporization deposition process, are much stronger than the molecular bonds established between intermediate layer 7 and the rest of constraint film 1 (i.e. film 6), therefore intermediate layer 7 can separate without fractures from the rest of constraint film 1 (i.e. from film 6) during the removal of constraint film 1.

Preferably, though not necessarily, after the polymerization of thermosetting resin 4 of semi-finished product 2' is completed and constraint film 1 is removed from semi-finished product 2', the production method of composite material artefacts finally provides for the outer film 5 of resulting artefact 2 to be coated, on choice and alternatively, with a layer of transparent paint applied preferably, though not necessarily, by spray; with a layer of transparent thermosetting resin, and a new thermal curing cycle being consequently performed so as to cause the polymerization also of this second resin; or with a transparent film, possibly auto-adhesive, and made of polyurethane or other plastic polymer resin.

After having stably bonded to the outer film 5 of artefact 2, the layer of paint, the layer of resin or the plastic polymer film form a supplementary transparent surface layer, which serves to protect outer film 5 of artefact 2 from scratches and mechanical abrasions of any kind.

There are many advantages resulting from the use of the above-described constraint film 1.

First of all, being able to deposit surface layer 8 directly on the surface of the composite material artefact 2, transforming said layer into the outer film 5 of the artefact, the constraint film 1 is able to colour the surface of artefact 2 with the colour typical of the material forming surface layer 8.

Since it is obtained by means of a homogeneous layer of coloured material, and not by means of a large amount of microscopical particles of pigment dispersed in the matrix of thermosetting resin, the colour on artefact 2 has an intensity, brightness and shine comparable to those that are obtained by painting the composite material artefact, by spray or brush, at the end of the polymerization process of the thermosetting resin.

Furthermore, by using constraint film 1, it is possible to transfer onto the surface of artefact 2 the metal material forming surface layer 8, thus obtaining the outer film 5 of artefact 2 with the preselected material. Outer film 5 obtained thereby is uniform and compact, and has a metal-type surface finishing which is comparable to that which would be obtained by surface coating, electrolysis or vacuum deposition directly on the end product. By using constraint film 1, the surface of composite material artefact 2 may also be ennobled with gold, silver and platinum, with particularly limited costs. The amount of valuable material per surface unit required to form the outer film 5 is indeed very low.

In addition to the above, by using constraint films 1 with surface layer 8 made of metal material, the surface of composite material artefact 2 may be completely metallised thus making it electrically conductive. A feature which may not be obtained by traditional colouring methods in which the microscopical particles of pigment, even when made of electrically conductive metal material, remain in any case dispersed in the thermosetting resin which is well-known to be an excellent electrical insulator.

By using constraint films 1 with surface layer 8 made of Teflon, it is finally possible to confer to the surface of artefact 2 the anti-adhesive properties typical of such material.

Clearly, changes and variants may be made to constraint film 1, to its production method, and to the production method of composite material artefacts 2 using this film, without however departing from the scope of the present invention.

For example, instead of being formed by transparent paint, intermediate layer 7 of release chemical product of constraint film 1 may be formed by a layer of coloured paint applied by means of flexo printing or the like, such as for instance the printing ink commercialized by the company FlintGroup Italia S.p.a. with the name DAILOX ARL.

Likewise to the coloured paint, in fact the printing ink is formed by a liquid and substantially transparent mixture of resin and diluent/solvent which are finely mixed together, and by a variable amount of basic pigment particles (i.e. finely ground particles of the desired colouring substance) suspended in the substantially transparent liquid mixture. The diluent/solvent serves to maintain the resin in a liquid state, while the resin is the chemical substance which grips to the surface of film 6 when it is still in a liquid phase, and which stably sticks to the surface of film 6 retaining the pigment particles when the diluent/solvent is naturally dispersed by evaporation.

The production method of composite material artefacts may also be used to make composite material artefacts with a multilayer surface structure.

In this case, after thermosetting resin 4 of the semi-finished product 2' has completed the polymerisation, after constraint film 1 has been removed from the semi-finished product 2' so as to form outer film 5 of artefact 2, and possibly after supplementary surface layer with protective function has been realized, the production method of composite material artefacts could also provide the step of applying on the outer film 5 of artefact 2, or even on the supplementary surface layer with protective function, a second constraint film 1 which, at the end of the polymerization process of the underlying resin, would be incorporated in artefact 2 providing a surface covering with multiplayer structure.

Obviously, it would be possible to overlap two, three, four, or more constraint films 1 of different kinds, so that each single layer of the surface covering obtained on artefact 2 has the physical features (for instance electrical conductivity) of the material that forms the surface layer 8 of constraint film 1 used in the production process.

## Claims

1. Constraint film (1) to be used in production of composite material artefacts (2), comprising a plastic polymer supporting film (6), an intermediate layer (7) of release chemical product that coats the front face (6a) of the supporting film (6) intended to come into contact with the semi-finished product (2') which will give rise to the composite material artefact (2), and a surface layer (8) of coating material applied onto the intermediate layer (7) via vacuum vaporization deposition.

2. A constraint film according to claim 1, **characterised in that** the supporting film (6) is structured so that the plastic polymer which is located on the surface of the front face (6a) of the supporting film (6) intended to come into contact with the semi-finished product (2'), locally has a surface tension (Ts) having a value greater than 38 Dyne/centimetre.

3. A constraint film according to claim 2, **characterised in that** the plastic polymer which is located on the surface of the front face (6a) of the supporting film (6), locally has a tension surface (Tₛ) having a value ranging between 45 Dyne/centimetre and 70 Dyne/centimetre.

4. A constraint film according to any of the preceding claims, **characterised in that** the supporting film (6) is made of polypropylene.

5. A constraint film according to claim 4, **characterised in that** the supporting film (6) is made of biaxially oriented polypropylene.

6. A constraint film according to any of the preceding claims, **characterised in that** the surface layer (8) is made of metal material.

7. A constraint film according to any of claims 1 to 5, **characterised in that** the surface layer (8) is made of silicon, graphite, Teflon or other materials which may be deposited via vacuum vaporization.

8. A constraint film according to any of the preceding claims, **characterised in that** the intermediate layer (7) is formed by a layer of transparent or coloured paint which is spread on the front face (6a) of the supporting film (6) via a flexo printing process or the like; the thickness of the intermediate layer (7) being lower than the thickness (d) of the supporting film (6) by at least one order of magnitude.

9. Production method of a resin constraint film (1) to be used in the production of composite material artefacts (2); the method being **characterised by** comprising the steps of
- realizing, via a flexo printing process or the like, a first layer (7) of a release chemical product on the surface of a plastic polymer supporting film (6), coating the front face (6a) of the film intended to come into contact with the semi-finished product (2') which will give rise to the composite material artefact (2); and
- realizing, via a vacuum vaporization deposition, a second layer (8) of coating material over the first layer (7) of release chemical product.

10. A production method of a constraint film according to claim 9, **characterised by** also comprising, before the step of realizing said first layer, the step of subjecting the front face (6a) of the supporting film (6) to a surface treatment so that the plastic polymer which is located on the surface of said front face (6a) locally has a surface tension (Tₛ) having a value greater than 38 Dyne/centimetre.

11. A production method of a constraint film according to claim 10, **characterised in that**, at the end of said surface treatment, the plastic polymer which is located on the surface of the front face (6a) of the supporting film (6), locally has a tension surface (Tₛ) having a value ranging between 45 and 70 Dyne/centimetre.

12. A production method of a constraint film according to claim 9, 10 or 11, **characterised in that** the supporting film (6) is made of polypropylene.

13. A production method of a constraint film according to claim 12, **characterised in that** the supporting film (6) is made of biaxially oriented polypropylene.

14. A production method of a constraint film according to any of claims 9 to 13, **characterised in that** the second layer (8) is made of metal material.

15. A production method of a constraint film according to any of claims 9 to 13, **characterised in that** the second layer (8) is made of silicon, graphite, Teflon or other materials which may be deposited via vacuum vaporization.

16. A production method of a constraint film according to any of claims 9 to 15, **characterised in that** the first layer (7) is formed by a layer of transparent or coloured paint with a thickness smaller than the thickness (d) of the supporting film (6).

17. Production method of composite material artefacts (2) formed by one or more overlapped layers of fibres (3) of organic or inorganic material, embedded in a matrix of thermosetting resin (4); the method being **characterised by** comprising, in sequence,
- the step of realizing a semi-finished product (2') which follows the shape of the composite material artefact (2) to be manufactured, and which is formed by one or more layers of said fibres (3) impregnated with a thermosetting resin (4) still in a high viscosity liquid state;
- the step of covering at least one surface (2a) of the semi-finished product (2') with a constraint film (1) which is manufactured according to any of claims 9 to 16**,** so to confine the thermosetting resin (4) still in a high viscosity liquid state within the semi-finished product (2'), further taking care that said constraint film (1) is oriented so that its surface layer (8) is arranged in direct contact with the semi-finished product (2'); and finally
- the step of subjecting the semi-finished product (2') covered by the constraint film (1) to a thermal curing cycle so as to cause the polymerization of the thermosetting resin (4) with the subsequent irreversible solidification thereof.

18. A production method of composite material artefacts according to claim 17, **characterised by** also comprising, once the polymerization of the thermosetting resin (4) is completed, the step of removing the constraint film (1) from the semi-finished product (2'), so that the constraint film (1) leaves its surface layer (8) stably stuck on said surface (2a) of the semi-finished product (2'), so as to form thereon an outer coating film (5).

19. A production method of composite material artefacts according to claim 18, **characterised by** also comprising, once the constraint film (1) is removed from the semi-finished product (2'), the step of applying on the outer coating film (5) of the resulting artefact (2), a layer of transparent paint, or a layer of thermosetting transparent resin, or a transparent plastic polymer film.

## Patentansprüche

1. Auflagefilm (1), der bei der Herstellung von Kompositmaterial-Artefakten (2) verwendet werden kann, mit einem Kunststoffpolymer-Trägerfilm (6), einer Zwischenlage (7) eines chemischen Freisetzungsprodukts, welche die Frontfläche (6a) des Trägerfilms (6) überdeckt, um in Kontakt mit dem halbfertigen Produkt (2') zu kommen, was zu dem Kompositmaterial-Artefakt (2) führt, und einer Oberflächenlage (8) aus Beschichtungsmaterial, das auf die Zwischenlage (7) mittels Vakuum-Dampfabscheidung aufgebracht wird.

2. Auflagefilm nach Anspruch 1, **dadurch gekennzeichnet, dass** der Trägerfilm (6) so strukturiert ist, dass das Kunststoffpolymer, welches auf der Oberseite der Frontfläche (6a) des Trägerfilms (6) angeordnet ist, um in Kontakt mit dem halbseitigen Produkt (2') zu kommen, lokal eine Oberflächenspannung (Ts) mit einem Wert größer als 38 Dyne/Zentimeter hat.

3. Auflagefilm nach Anspruch 2, **dadurch gekennzeichnet, dass** das Kunststoffpolymer, welches auf der Oberseite der Frontfläche (6a) des Trägerfilms (6) angeordnet ist, lokal einer Oberflächenspannung (Ts) mit einem Wert im Bereich zwischen 45 Dyne/Zentimeter und 70 Dyne/Zentimeter hat.

4. Auflagefilm nach einem der vorhergehenden Ansprüche, **dadurch gekennzeichnet, dass** der Trägerfilm (6) aus Polypropylen hergestellt ist.

5. Auflagefilm nach Anspruch 4, **dadurch gekennzeichnet, dass** der Trägerfilm (6) aus einem biaxial orientierten Polypropylen hergestellt ist.

6. Auflagefilm nach einem der vorhergehenden Ansprüche, **dadurch gekennzeichnet, dass** die Oberflächenlage (8) aus einem Metallmaterial hergestellt ist.

7. Auflagefilm nach einem der Ansprüche 1 bis 5, **dadurch gekennzeichnet, dass** die Oberflächenlage (8) aus Silizium, Graphit, Teflon oder anderen Materialien hergestellt ist, welche über eine Vakuumverdampfung abgeschieden werden können.

8. Auflagefilm nach einem der vorhergehenden Ansprüche, **dadurch gekennzeichnet, dass** die Zwischenlage (7) aus einer Schicht aus transparentem oder koloriertem Lack ausgebildet ist, welcher auf der Frontfläche (6a) des Trägerfilms (6) mit Hilfe eines Flexodruckverfahrens oder dgl. verteilt ist, wobei die Dicke der Zwischenlage (7) um wenigstens eine Größenordnung geringer als die Dicke (d) des Trägerfilms (6) ist.

9. Herstellungsverfahrens eines Harz- Auflagefilms (1), der bei der Herstellung von Kompositmaterial- Artefakten (2) verwendet werden soll, wobei das Verfahren **gekennzeichnet ist durch** die Schritte
- Realisieren mit Hilfe eines Flexodruckverfahrens oder dgl. einer ersten Lage (7) eines chemischen Freisetzungsprodukts auf der Oberfläche eines Kunststoffpolymer-Trägerfilms (6), Beschichten der Frontfläche (6a) des Films, der in Kontakt mit dem halbfertigen Produkt (2') kommen soll, was zu den Kompositmaterial-Artefakten (2) führt; und
- Realisieren mit Hilfe einer Vakuum-Dampfabscheidung einer zweiten Lage (8) aus Beschichtungsmaterial über der ersten Lage (7) des chemischen Freisetzungsprodukts.

10. Herstellungsverfahren eines Auflagefilms nach Anspruch 9, gekennzeichnet auch, vor dem Schritt des Realisierens der ersten Lage, durch das Vorhandensein des Schritts, bei dem die Frontfläche (6a) des Trägerfilms (6) einer Oberflächenbehandlung ausgesetzt wird, so dass das Kunststoffpolymer, welches auf der Oberseite der Frontfläche (6a) angeordnet ist, lokal eine Oberflächenspannung (Ts) hat, die einen Wert aufweist, der größer als 38 Dyne/Zentimeter ist.

11. Herstellungsverfahren eines Auflagefilms nach Anspruch 10, **dadurch gekennzeichnet, dass** am Ende der Oberflächenbehandlung das Kunststoffpolymer, welches auf der Oberseite der Frontfläche (6a) des Trägerfilms (6) angeordnet ist, lokal eine Oberflächenspannung (Ts) mit einem Wert im Bereich zwischen 45 und 70 Dyne/Zentimeter hat.

12. Herstellungsverfahren eines Auflagefilms nach Anspruch 9, 10 oder 11, **dadurch gekennzeichnet, dass** der Trägerfilm (6) aus Polypropylen hergestellt ist.

13. Herstellungsverfahren eines Auflagefilm nach Anspruch 12, **dadurch gekennzeichnet, dass** der Trägerfilm (6) aus einem biaxial orientierten Polypropylen hergestellt ist.

14. Herstellungsverfahren eines Auflagefilms nach einem der Ansprüche 9 bis 13, **dadurch gekennzeichnet, dass** die zweite Lage (8) aus Metallmaterial hergestellt ist.

15. Herstellungsverfahren eines Auflagefilms nach einem der Ansprüche 9 bis 13, **dadurch gekennzeichnet, dass** die zweite Lage (8) aus Silizium, Graphit, Teflon oder anderen Materialien hergestellt ist, welche über eine Vakuumverdampfung abgeschieden werden können.

16. Herstellungsverfahren eines Auflagefilms nach einem der Ansprüche 9 bis 15, **dadurch gekennzeichnet, dass** die erste Lage (7) durch eine Lage aus transparentem oder koloriertem Lack mit einer Dicke kleiner als der Dicke (d) des Trägerfilms (6) gebildet wird.

17. Herstellungsverfahren von Kompositmaterial-Artefakten (2), die durch ein oder mehrere sich überlappende Faserlagen (3) aus organischem oder anorganischem Material, eingebettet in eine Matrix aus duroplastischem Harz (4), ausgebildet sind, wobei das Verfahren **gekennzeichnet ist durch**, in Folge
- den Schritt des Realisierens eines halbfertigen Produkts (2'), welches der Form des herzustellenden Kompositmaterial-Artefakts (2) folgt und welches **durch** ein oder mehrere Lagen aus Fasern (3) gebildet wird, die mit einem duroplastischen Harz (4) imprägniert sind, das sich noch in einem hochviskosen flüssigen Zustand befindet,
- den Schritt des Abdeckens wenigstens einer Oberfläche (2a) des halbfertigen Produkts (2') mit einem Auflagefilm (1), welcher nach einem der Ansprüche 9 bis 16 hergestellt ist, um so das duroplastische Harz (4), das sich noch in einem hochviskosen flüssigen Zustand befindet, innerhalb des halbfertigen Produkts (2') zu begrenzen, ferner dabei sorgetragend, dass der Auflagefilm (1) so orientiert ist, dass seine Oberflächenlage (8) in direktem Kontakt mit dem halbfertigen Produkt (2') angeordnet ist; schließlich
- den Schritt des Unterziehens des halbfertigen Produkts (2'), das mit dem Auflagefilm (1) abgedeckt ist, einem wärmehärtenden Zyklus, um so die Polymerisation des duoplastischen Harzes (4) mit der nachfolgenden irreversiblen Verfestigung desselben zu veranlassen.

18. Herstellungsverfahren von Kompositmaterial-Artefakten nach Anspruch 17, gekennzeichnet auch durch, sobald die Polymerisation des duoplastischen Harzes (4) abgeschlossen ist, den Schritt des Entfernens des Auflagefilms (1) von dem halbfertigen Produkt (2'), so dass der Auflagefilm (1) seine Oberflächenlage (8) stabil auf der Oberfläche (2a) des halbfertigen Produkts (2') haftend zurück lässt, um so auf diesem einen äußeren Beschichtungsfilm (5) zu bilden.

19. Herstellungsverfahren von Kompositmaterial-Arktefakten nach Anspruch 18, gekennzeichnet auch durch, sobald der Auflagefilm (1) von dem halbfertigen Produkt (2') entfernt worden ist, den Schritt des Aufbringens einer Schicht aus transparenter Farbe oder einer Schicht aus einem duoplastischen transparenten Harz oder einem transparenten Kunststoffpolymerfilm auf den äußeren Beschichtungsfilm (5) des resultierenden Artefakt (2).

## Revendications

1. Film (1) de contention utilisable pour la production de pièces (2) en matériaux composites, comprenant un film (6) polymère support en polymère plastique, une couche (7) intermédiaire d'un produit chimique de libération qui recouvre la face (6a) avant du film (6) support prévu pour venir au contact du produit (2') semi-fini qui va conduire à la pièce (2) en matériaux composites et une couche de surface (8) d'un matériau de revêtement appliquée sur la couche (7) intermédiaire par dépôt en phase vapeur.

2. Film de contention selon la revendication 1, **caractérisé en ce que** le film (6) support est structuré de façon que le polymère plastique qui est disposé sur la surface de la face (6a) avant du film (6) support prévu pour venir au contact du produit (2') semi-fini a localement une tension de surface (Tₛ) ayant une valeur supérieure à 38 Dyne/centimètre.

3. Film de contention selon la revendication 2, **caractérisé en ce que** le polymère plastique qui est localisé sur la surface de la face (6a) avant du film (6) support, a localement une tension de surface (Tₛ) comprise dans une plage de 45 Dyne/centimètre et 70 Dyne/centimètre.

4. Film de contention selon l'une quelconque des revendications précédentes, **caractérisé en ce que** le film (6) support est composé de polypropylène.

5. Film de contention selon la revendication 4, **caractérisé en ce que** le film (6) support est composé d'un polypropylène orienté bi-axialement.

6. Film de contention selon l'une quelconque des revendications précédentes, **caractérisé en ce que** la couche (8) de surface est composée d'un matériau métallique.

7. Film de contention selon l'une quelconque des revendications 1 à 5, **caractérisé en ce que** la couche (8) de surface est composée de silicone, de graphite, de Téflon ou autres matériaux qui peuvent être déposés en phase vapeur.

8. Film de contention selon l'une quelconque des revendications précédentes, **caractérisé en ce que** la couche (7) intermédiaire est constituée d'une couche de peinture transparente ou colorée qui est répartie sur la face (6a) avant du film (6) support au moyen d'un procédé flexographique ou équivalent; l'épaisseur de la couche (7) intermédiaire étant inférieure à l'épaisseur (d) du film (6) support d'au moins un ordre de grandeur.

9. Méthode de production d'un film (1) de contention de résine pour être utilisé dans la production de produits en matériaux composites; la méthode étant **caractérisée en ce qu'**elle comprend les étapes de:
- Réaliser par un procédé d'impression flexo ou équivalent, une première couche (7) de produit chimique de libération sur la surface d'un film (6) support en polymère plastique, revêtir la face (6a) avant du film prvue pour venir au contact du produit (2') semi-fini qui conduira au produit (2) en matériaux composites; et
- Réaliser, par un dépôt en phase vapeur, une seconde couche (8) d'un matériau de revêtement sur la première couche (7) du produit chimique de libération.

10. Méthode de production d'un film de contention selon la revendication 9, **caractérisée en ce qu'**elle comprend aussi, avant l'étape de réalisation de la première couche, l'étape de soumettre la face (6a) avant du film (6) support à un traitement de surface de façon que le polymère plastique qui est disposé sur la surface de ladite face (6a) avant présente localement une tension (Tₛ) de surface ayant une valeur plus grand que 38 Dyne/centimètre.

11. Méthode de production d'un film de contention selon la revendication 10, **caractérisée en ce que**, à la fin dudit traitement de surface, le polymère plastique qui est localisé sur la surface de la face (6a) avant du film (6) support, présente localement une tension (Tₛ) de surface ayant une valeur comprise entre 45 et 70 Dyne/centimètre.

12. Méthode de production d'un film de contention selon l'une des revendications 9, 10 ou 11, **caractérisée en ce que** le film support est composé de polypropylène.

13. Méthode de production d'un film de contention selon la revendication 12, **caractérisée en ce que** le film support est composé de polypropylène orienté bi-axialement.

14. Méthode de production d'un film de contention selon l'une des revendications 9 à 13, **caractérisée en ce que** la seconde couche (8) est constituée d'un matériau métallique.

15. Méthode de production d'un film de contention selon l'une quelconque des revendications 9 à 13, **caractérisée en ce que** la seconde couche (8) est constituée de silicone, de graphite, de Téflon ou d'autres matériaux qui peuvent être déposés en phase vapeur.

16. Méthode de production d'un film de contention selon l'une quelconque des revendications 9 à 15, **caractérisée en ce que** la première couche (7) est composée d'une couche de peinture transparente ou colorée avec une épaisseur plus faible que l'épaisseur (d) du film (6) support.

17. Méthode de production de pièces (2) en matériaux composites formés par une ou plusieurs couches de fibres (3) superposées en un matériau organique ou inorganique, noyées dans une matrice de résine (4) thermodurcissable; la méthode étant **caractérisée en ce qu'**elle comprend, de façon successive :
- Une étape de réalisation d'un produit (2') semi-fini qui suit la forme de la pièce (2) en matériau composite devant être fabriquée et qui est formé par une ou plusieurs couches de fibres (3) imprégnées d'une résine (4) thermodurcissable encore à l'état liquide à haute viscosité;
- Une étape de revêtement d'au moins une surface (2a) d'un produit (2') semi-fini avec un film (1) de contention qui est fabriqué selon l'une des revendications 9 à 16, de façon à confiner la résine (4) thermodurcissable encore à l'état liquide à haute viscosité dans le produit (2') semi-fini, en prenant soin de plus que ledit film (1) de contention soit orienté de façon que sa couche (8) de surface soit agencée en contact direct avec le produit (2') semi-fini; et enfin
- Un étape de soumission dudit produit (2') semi-fini couvert dudit film (1) de contention à un cycle de montée en température de façon à provoquer la polymérisation de la résine thermodurcissable avec la solidification irréversible correspondante.

18. Méthode de production de pièces en matériaux composites selon la revendication 17, **caractérisée en ce qu'**elle comprend aussi, une fois la polymérisation de la résine (4) thermodurcissable finalisée, une étape de retrait du film (1) de contention du produit (2') semi-fini, de façon que le film (1) de contention laisse subsister sa couche (8) de surface collée sur ladite surface (2a) du produit semi-fini, en sorte de former sur le dessus un film (5) de revêtement extérieur.

19. Méthode de production de pièces en matériaux composites selon la revendication 18, **caractérisée en ce qu'**elle comprend aussi, une fois le film (1) de contention retiré du produit (2') semi-fini, une étape d'application sur le film (5) de revêtement extérieur de la pièce (2) obtenue, d'une couche de peinture transparente, ou une couche de résine transparente thermodurcissable, ou un film de polymère plastique transparent.
